# EUROPÄISCHE PATENTANMELDUNG

(11) **EP 4 310 123 A1**
(43) Veröffentlichungstag der Anmeldung: **24.01.2024**
(21) Anmeldenummer: 22185809.5
(22) Anmeldetag: 19.07.2022
(51) Int. Cl.: C08G 59/24, C08G 59/32, C08G 59/38, C08G 59/42, C08G 59/68

(54) **HOCHTEMPERATURHARZ, FORMKÖRPER DARAUS UND VERBUND AUS DEM FORMKÖRPER UND EINEM ELEMENT EINES LEISTUNGSELEKTRONISCHEN BAUTEILS**

(71) Anmelder: Siemens Aktiengesellschaft, 80333 München (DE)
(72) Erfinder: Höhn, Klaus, 91301 Forchheim (DE)
(74) Vertreter: Siemens Patent Attorneys

(57) **Zusammenfassung**

Die Erfindung betrifft ein Hochtemperaturharz, einen Formkörper daraus und einen Verbund aus dem Formkörper und einem Element eines leistungselektronischen Bauteils. Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden.

## Beschreibung

Die Erfindung betrifft ein Hochtemperaturharz, einen Formkörper daraus und einen Verbund aus dem Formkörper und einem Element eines leistungselektronischen Bauteils.

Zur Herstellung leistungselektronischer Produkte werden fertigungstaugliche Hochtemperaturharze in der Aufbau- und Verbindungstechnik als Isolierwerkstoffe mit einer Glasübergangstemperatur von ca. 180°C oder mehr zum Vergießen, Kleben, Verkapseln, Bonden, als Abdeckung und/oder als Under-/Sidefiller eingesetzt. Diese Systeme können als 1-K "Komponenten"-Systeme oder 2K-Systeme, wobei zwei Komponenten, Harz und Härter, unmittelbar vor der Verarbeitung vermischt werden, weil sie als Mischung nicht lagerstabil sind, vorliegen.

Dafür geeignete Harzsysteme halten die Einsatztemperaturen aus und zeigen elektrische Durchschlagsfestigkeit für Anwendungen in der Leistungselektronik.

Die bekannten Harze für dieses Eigenschaftsprofil sind nicht immer REACH und/oder RoHS konform. Die RoHS-Richtlinie - EU RiLi 2011/65/EU dient der Beschränkung der Verwendung bestimmter gefährlicher Stoffe in Elektro- und Elektronikgeräten. Sie regelt die Verwendung und das Inverkehrbringen von Gefahrstoffen in Elektrogeräten und elektronischen Bauelementen.

Die REACH Verordnung EG Nr. 1907/2006 ist eine EU-Chemikalienverordnung, die am 1. Juni 2007 in Kraft getreten ist. "REACH" steht für Registration, Evaluation, Authorization and Restriction of Chemicals.

Beispielhafte Harze, die bislang eingesetzt werden, sind das Eccobond FP 4531 mit einer Glasübergangstemperatur von 140°C, gemessen über DSC, eingesetzt. In leistungsstärkeren Elektronik-Produkten einer nächsten Generation ist aber zu erwarten, dass die Tg von 140°C nicht ausreichen wird. Vielmehr steht zu erwarten, dass das eingesetzte Harz im Betrieb Temperaturen von 150°C ausgesetzt ist. Es gibt auch Harze der Fa. Henkel^{®} -z.B. das Henkel^{®}-Harz UF1173^{®} - und von der Fa Panakol^{®}, allerdings haben diese unzureichende Korrosionseigenschaften und/oder schlechte Verarbeitungseigenschaften.

Beispielsweise ist aus der DE 11 2019 006 442 T5 eine Zusammensetzung mit einem Harz Verbindungen aus der Gruppe der Maleimiden, Nadimiden und/oder Itaconimiden umfassend, bekannt.

Die bekannten Montage- und Kapselharze beinhalten toxische, karzinogene und/oder mutagene Inhaltsstoffe und dürfen zukünftig nicht mehr eingesetzt werden.

Für die Montage und die Kapselung von leistungselektronischen Produkten der nächsten Generation konnten am Markt keine geeigneten Harze identifiziert werden.

Daher ist es Aufgabe der vorliegenden Erfindung ein fertigungstaugliches Hochtemperaturharz für die nächste Generation leistungsstarker Elektronikprodukte, mit einem Tg von bis zu 180°C oder mehr und Durchschlagsfestigkeiten der daraus herstellten Formkörper von größer 20kV/mm. Zudem ist es Aufgabe ein Hochtemperaturharz zur Verfügung zu stellen, das keine kritischen Inhaltsstoffe, insbesondere in Bezug auf Toxizität, die REACH Verordnung und/oder RoHS-Richtlinie, umfasst und CLP konform ist. CLP entspricht der EU-Chemikalien-Verordnung (EG) Nr. 1272/2008.

Diese Aufgabe wird durch den Gegenstand der Erfindung, wie er in der Beschreibung, den Figuren und den Ansprüchen offenbart ist, gelöst.

Demnach ist Gegenstand der vorliegenden Erfindung eine Harzzusammensetzung, zumindest Komponente **A** und Komponente **B** im Verhältnis **A** zu **B** im Bereich von 100:90 bis 100:125 in der Harzzusammensetzung vorliegend, umfassend:
- Komponente **A** enthält zumindest zwei Epoxidharzverbindungen,
   a) 75Gew% oder mehr an 3,4-Epoxycyclohexancarbonsäure-(3,4-epoxycyclohexalmethylester) mit der
      Strukturformel **I** und der CAS Nummer: 2386-87-0 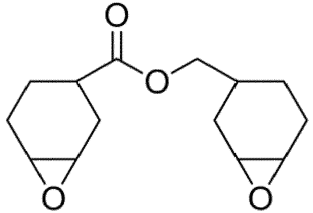 und
   b) 25Gew% oder weniger einer zweiten Epoxidharzverbindung ausgewählt aus der Gruppe umfassend die folgenden Epoxidharzverbindungen:
      b1) Poly-[(phenyl-glycidylether)-co-formaldehyd] der Strukturformel **II** mit den CAS Nummern 28064-14-4 respektive CAS Nummer 25068-38-6 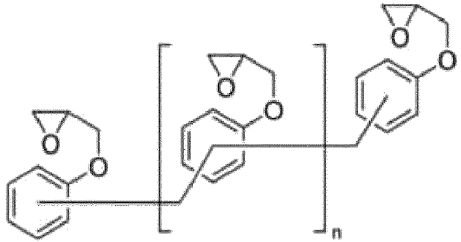 und
      b2)Bisphenol-A-Diglycidyletherharz der
         Strukturformel **III** CAS 25068-38-6 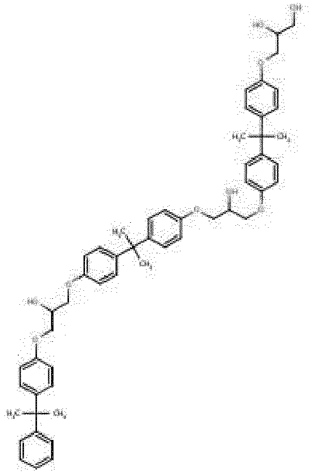 wobei die beiden Epoxidharzverbindungen **II** und **III** jeweils allein oder in beliebigen Mischungen, Blends, Copolymeren und/oder Kombinationen davon vorliegen,
- Komponente **B** umfasst
- zumindest 90 Gew% eines Methyl-tetra-hydrophthalsäureanhydrids MTHPA und
0,3 bis 5 Gew% eines 1,2-Dimethylimidazols.

Außerdem ist Gegenstand der vorliegenden Erfindung ein Formkörper, erhältlich durch Aushärten einer Harzzusammensetzung wie oben beschrieben.

Schließlich ist Gegenstand der vorliegenden Erfindung ein Verbund mit einer Harzzusammensetzung wie oben beschrieben oder eines daraus hergestellten Formkörpers.

Beispielsweise liegt im Verbund die Harzzusammensetzung in der Funktion eines Klebers zwischen dem Substrat und einer Leiterplatte, einer Platine und/oder einem Wafer mit einem Produkt und/oder Bauteil aus dem Bereich der Leistungselektronik vor.

Bei den beiden Verbindungen der Komponente **B** wo zumindest 90 Gew% eines "Phthalsäureanhydrids" dem Methyl-tetrahydrophthalsäureanhydrid MTHPA und 0,3 bis 5 Gew% eines "Imidazols" in Form des 1,2-Dimethylimidazols - z.B. das mit der CAS- Nummer: 1739-84-0 - vorliegen, werden vorzugsweise und überwiegend REACH konforme Substanzen ausgewählt.

Als typisches Produkt aus dem Bereich der Leistungselektronik können beispielsweise IGBT-Bauteile angesehen werden.

IGBTs sind typische Produkte der Leistungselektronik. "IGBT" steht für "Insulated Gate Bipolar Transistor" im Bereich von 10kW bis 350 kW erhältlich von 50A bis 600 A bei 1200V.

Die Harzzusammensetzung gemäß der vorliegenden Erfindung ist ein strategisches Material für die Leistungselektronik, weil sie das Anforderungsprofil an die neue Generation - speziell auch im Hinblick auf die Durchschlagsfestigkeit und Glasübergangstemperatur - und auch die Anforderungen der geltenden Gesundheitsrichtlinien und Verordnungen erfüllt.

Der Verbund aus dem Formkörper, der durch Härtung der Harzzusammensetzung herstellbar ist und dem leistungselektronischen Bauteil zeigt Grenzflächen zwischen dem Formkörper und dem Bauteil, insbesondere zumindest eine Grenzfläche zwischen dem Formkörper und einem metallischen Element des Bauteils und/oder einem keramischen, z.B. metalloxidischen, nidridischen Element des Bauteils.

Nach einer vorteilhaften Ausführungsform der Erfindung liegt die Verbundfestigkeit eines Verbunds aus der Harzzusammensetzung hergestellten Formkörpers mit Metall oder Metalllegierung wie Silber, Gold, oder einer Keramik wie Metalloxid, Metallnitrid etc. bei RT bei mindestens 20 MPA und bei 150°C immer noch bei minimal 10MPA.

Nach einer vorteilhaften Ausführungsform der Erfindung liegt die Temperaturstabilität eines derartigen Verbunds getestet z.B. mit Silber, Gold, Metalloxid, und/oder Keramik - als "Verbundfestigkeit" - nach 6 Wochen bei 180°C immer noch von minimal 20 MPA bei Raumtemperatur.

Die Verbundfestigkeit wurde mit einem so genannten "die shear test" ermittelt. Im "die shear test" wird die "die shear strength" gemessen, vorliegend mit einem "Dage 4000" Gerät der Firma Nordson. Der Bondtester 4000 der Firma Nordson "Test und Inspektion" ist ein Mehrzweckgerät, das alle Pull- und Scheranwendungen ausführen kann. Der Bondtester 4000 verwendet patentierte reibungsfreie Belastungspatronen und Luftlagertechnologien, um maximale Präzision, Wiederholbarkeit und Reproduzierbarkeit zu gewährleisten. Viele Funktionen sind durch hochentwickelte elektronische und Software-Steuerungen automatisiert.

Bezüglich der Korrosionseigenschaften zeigt eine vorteilhafte Ausführungsform der Erfindung einen Gesamtchlorgehalt in der Harzzusammensetzung und/oder im Formkörper von maximal 200ppm, der Formkörper liegt also sehr Chlor-reduziert vor.

Die Harzzusammensetzung ist vorteilhafterweise frei von Bestandteilen wie Lösungsmittel, Silikone, schwefelhaltige Verbindungen und/oder Ammonium-Ionen, weil darunter Prozessfähigkeit, Haftungseigenschaften und/oder Korrosionsbeständigkeit des Formkörpers leiden.

Die Harzzusammensetzung ist nach einer vorteilhaften Ausführungsform bei -20°C mindestens 6 Monate als 1-komponentiges System lagerstabil, bei Raumtemperatur als 2-komponentiges System, wobei Komponente **A** von Komponente **B** getrennt gelagert ist, auch mindestens 6 Monate.

Die Glasübergangstemperatur Tg der Formkörper ist nach einer vorteilhaften Ausführungsform mindestens bei 160°C, bevorzugt mindestens bei 170°C und insbesondere bevorzugt bei mindestens 180°C, gemessen mit Dynamisch-mechanischer Analyse DMA.

Nach einer vorteilhaften Ausführungsform der Erfindung umfasst die Komponente **A** eine weitere, also dritte, Epoxidharz-Verbindung, z.B. mit der CAS Nr. 68608-97-1, Araldite^{®} DY-E. Das ist ein Monoglycidylether eines C12 bis C14-Alkohols der Fa. Huntsman, der als monofunktioneller, aliphatischer Reaktivverdünner für Epoxidharze einsetzbar ist. Der Monoglycidylether ist nach dieser vorteilhaften Ausführungsform in einer Menge von 0 bis 10 Gew%, bevorzugt im Bereich von 3Gew% bis 8Gew%, in der in der Komponente **A** vorgesehen.

Bei der Monoglycidyletherkomponente als dritte Epoxidharzverbindung in Komponente **A** handelt es sich insbesondere um einen längerkettigen Monoglycidylether, wie z.B. einen der vorzugsweise mindestens 8 Kohlenstoffatome aliphatisch, nicht aromatisch verbunden und insbesondere bevorzugt geradkettig, nicht verzweigt verbunden, umfasst.

Der Monoglycidylether dient hier insbesondere zur Anpassung der thermomechanischen Eigenschaften, kann aber auch als Reaktivverdünner bezeichnet werden.

Nach einer weiteren vorteilhaften Ausführungsform der Erfindung ist ein Reaktivverdünner in Form eines ε-Caprolactons vorgesehen. Dieser ist unter CAS 502-44-3 handelsüblich. Das ε -Caprolacton ist nach dieser vorteilhaften Ausführungsform in einer Menge von 0 bis 10 Gew%, bevorzugt von bis zu 8 Gew%, in der Komponente **A** vorgesehen.

Nach einer weiteren vorteilhaften Ausführungsform der Erfindung kann in der Komponente **A** noch ein mehrwertiger Alkohol, also eine Kohlenwasserstoff-Verbindung mit zumindest zwei Hydroxylgruppen, vorliegen. Beispielsweise kann dieser in Form eines 1,2 Propandiols, eines Butandiols, eines Trimethylolpropans vorliegen. Der mehrwertige Alkohol liegt nach dieser vorteilhaften Ausführungsform in einer Menge von 0 bis 10 Gew%, bevorzugt von bis zu 5 Gew%, in der Komponente **A** vor.

Nach einer vorteilhaften Ausführungsform ist der Formkörper aus einer Harzzusammensetzung nach der Erfindung erhältlich durch Aushärten der Harzzusammensetzung bei Temperaturen im Bereich 100 °C bis 180 °C, vorzugsweise 120 °C bis 160 °C.

Nach einer weiteren vorteilhaften Ausführungsform der Erfindung liegen in der Harzzusammensetzung Füllstoffe vor. Dabei können die Viskosität der Harzzusammensetzung, die gewünschten thermomechanischen Eigenschaften durch so genannte "electronic grade" Füllstoffe in weiten Grenzen eingestellt werden.

Als "electronic grade" - Füllstoffe werden hochreine Füllstoffe bezeichnet, die geringe Konzentrationen im ppm-Bereich kleiner 100ppm, an ionischen Verunreinigungen enthalten und damit eben nur ein besonders geringes Korrosionspotenzial in das Produkt einbringen.

Als Füllstoffe können anorganische Metalloxide, beispielsweise von den Elementen Silizium, Aluminium, Zirkonium, Yttrium, Zink allein oder in Mischmetalloxiden vorliegen. Des Weiteren können ergänzend oder alternativ dazu metallische Nitride, Silikate, Carbonate und/oder Glaskeramikpulver als Füllstoffe in Kombination oder allein eingesetzt werden. Alle vorgenannten Füllstoffe können miteinander in verschiedenen Fraktionen kombiniert vorliegen, wobei Form, Oberflächenbeschaffenheit und Größe der einzelnen Partikel beliebig wählbar sind.

Nach einer vorteilhaften Ausführungsform der Erfindung haben die Füllstoffe einen möglichst geringen ionischen Alkali-, Erdalkali- und/oder Eisengehalt. Typischerweise sollte der Gehalt an diesen Elementen ein ungefähres Maximum von 10ppm zeigen.

Nach einer weiteren vorteilhaften Ausführungsform ist vorgesehen, dass die durchschnittliche Partikelgröße oder Korngröße unter 70µm, bevorzugt kleiner 60µm und insbesondere bevorzugt kleiner 55µm ist. Ganz bevorzugt liegt die Korngröße der Füllstoffpartikel unter 53µm "cut-off".

Als "cut-off" werden größere Partikel werden abgetrennt, z. B. gesiebt. Dieser Trennprozess ist aufwendig und mit einem großen Materialverlust verbunden, so dass diese Füllstoffe sehr teuer sind.

Der Anteil an Füllstoff in der Harzzusammensetzung liegt nach einer vorteilhaften Ausführungsform im Bereich zwischen 40 bis 85 Gew%, vorzugsweise zwischen 50 bis 80 Gew%, bezogen auf die Gesamtmasse der Harzzusammensetzung.

Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden.

Im Folgenden wird die Erfindung anhand beispielhafter Harzzusammensetzungen näher erläutert:

### Beispiel 1:

Komponente **A** und Komponente **B** liegen im Verhältnis 100:100 vor. In der Komponente **B** liegt das Imidazol in einer Menge von 2 Gew% vor. In der Komponente **A** liegt ε-Caprolacton in einer Menge von 2 Gew% vor. Der Tg gemessen mit DSC liegt bei 182°C.

### Beispiel 2:

Komponente **A** und Komponente **B** liegen im Verhältnis 100:103 vor. In der Komponente **B** liegt das Imidazol in einer Menge von 2 Gew% vor. In der Komponente **A** liegt Monoglycidylether in einer Menge von 2 Gew% vor. Der Tg gemessen mit DSC liegt bei 184°C.

### Beispiel 3:

Komponente **A** und Komponente **B** liegen im Verhältnis 100:110 vor. In der Komponente **B** liegt das Imidazol in einer Menge von 0,5 Gew% vor. In der Komponente **A** liegt Monoglycidylether in einer Menge von 3 Gew% vor. Der Tg gemessen mit DSC liegt bei 205°C.

### Beispiel 4:

Komponente **A** und Komponente **B** liegen im Verhältnis 100:105 vor. In der Komponente **B** liegt das Imidazol in einer Menge von 2 Gew% vor.

### Beispiel 5:

Komponente **A** und Komponente **B** liegen im Verhältnis 100:110 vor. Komponente **A** hat 83 Gew% an 3,4-Epoxycyclohexancarbonsäure-(3,4-epoxycyclohexalmethylester), 10 Gew% Poly-[(phenyl-glycidylether)-co-formaldehyd] und 7 Gew% eines Monoglycidylethers. In Komponente **B** liegt Dimehtylimidazol in einer Menge von 1,5 Gew% vor.

### Beispiel 6:

Komponente **A** und Komponente **B** liegen im Verhältnis 100:100 vor. In der Komponente **A** liegt das Poly-[(phenylglycidylether)-co-formaldehyd] der Strukturformel **II** in einer Menge von 10 Gew% vor.

**Komponente A**

| | |
|---|---|
| Epoxidharz, Araldit CY179 (CAS 2386-87-0): | 90,0 Gew.-% |
| Epoxidharz, DEN 438 (CAS 28064-14-4): | 10,0 Gew.-% |

**Komponente B**

| | |
|---|---|
| MTHPA, Aradur HY917 (CAS 1107044-3): | 98,0 Gew.-% |
| 1,2-Dimethylimidazol (CAS 1739-84-0): | 2,0 Gew.% |

In den handelsüblichen MTHPA, wie Aradur HY 917, liegen isomere Formen und/oder Isomermischungen in verschiedenen Konzentrationen vor.

### Beispiel 7:

Komponente **A** und Komponente **B** liegen im Verhältnis 100:115 vor. Komponente **A** hat 83 Gew% an 3,4-Epoxycyclohexancarbonsäure-(3,4-epoxycyclohexalmethylester), 10 Gew% Poly-[(phenyl-glycidylether)-*co*-formaldehyd] und 7 Gew% eines Monoglycidylethers. In Komponente **B** liegt Dimehtylimidazol in einer Menge von 2,0 Gew% vor.

### Beispiel 8:

Komponente **A** und Komponente **B** liegen im Verhältnis 100:117 vor. Komponente **A** hat 83 Gew% an 3,4-Epoxycyclohexancarbonsäure-(3,4-epoxycyclohexalmethylester), 10 Gew% Poly-[(phenyl-glycidylether)-*co*-formaldehyd] und 7 Gew% eines Monoglycidylethers. In Komponente **B** liegt Dimehtylimidazol in einer Menge von 1,5 Gew% vor.

### Beispiel 9:

Komponente **A** und Komponente **B** liegen im Verhältnis 100:120 vor. Komponente **A** hat 83 Gew% an 3,4-Epoxycyclohexancarbonsäure-(3,4-epoxycyclohexalmethylester), 10 Gew% Poly-[(phenyl-glycidylether)-*co*-formaldehyd] und 7 Gew% eines Monoglycidylethers. In Komponente **B** liegt Dimehtylimidazol in einer Menge von 1,5 Gew% vor.

### Beispiel 10:

Komponente **A** und Komponente **B** liegen im Verhältnis 100:100 vor. In der Komponente **A** liegt

| | |
|---|---|
| Epoxidharz, Araldit CY179 (CAS 2386-87-0): | 85,0 Gew.-% |
| Epoxidharz, DEN 438 (CAS 28064-14-4): | 10,0 Gew.-% |

Reaktivverdünner, Araldit DY-E CH (CAS 68608-97-2)5,0 Gew.-%

**Komponente B**

| | |
|---|---|
| MTHPA, Aradur HY917 (CAS 1107044-3): | 99,5 Gew.-% |
| 1,2-Dimethylimidazol (CAS 1739-84-0): | 0,5 Gew.-% |

### Beispiel 11:

Komponente **A** und Komponente **B** liegen im Verhältnis 100:100 vor.

**Komponente A**

| | |
|---|---|
| Epoxidharz, Araldit CY179 (CAS 2386-87-0): | 85,0 Gew.-% |
| Epoxidharz, DEN 438 (CAS 28064-14-4): | 10,0 Gew.-% |
| Reaktivverdünner, Araldit DY-E CH (CAS 68608-97-2) | 5,0 Gew.-% |

**Komponente B**

| | |
|---|---|
| MTHPA, Aradur HY917 (CAS 1107044-3): | 98,0 Gew.-% |
| 1,2-Dimethylimidazol (CAS 1739-84-0): | 2,0 Gew.-% |

Das zur DSC Messung eingesetzte Messgerät ist eine DSC2000 von Perkin Elmer, wobei eine Heizrate von 10 K/min im Temperaturbereich von 40 °C bis 260 °C verwendet wurde.

Im Folgenden wird die Erfindung noch anhand von 4 Figuren, die Testergebnisse verschiedener Ausführungsformen der Erfindung zeigen, näher erläutert:

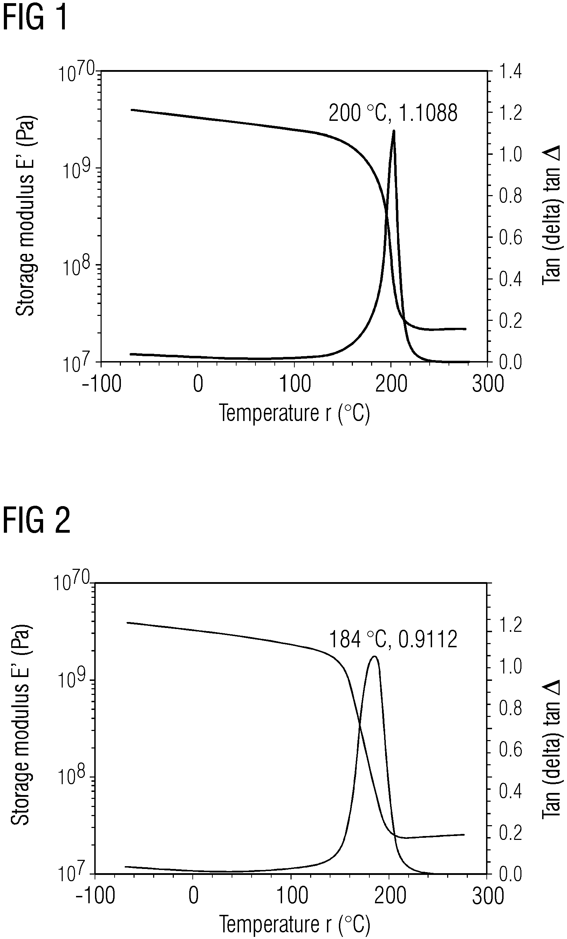

Figuren 1 und 2 zeigen Dynamisch-mechanische Analysen (DMA) zu zwei unterschiedlichen Ausführungsformen der Erfindung.

Die dynamisch-mechanische Analyse ist eine thermische Methode, um physikalische Eigenschaften von Kunststoffen zu bestimmen. Eine DMA unterwirft die zu untersuchende Probe in Abhängigkeit von der Temperatur einer sich zeitlich ändernden sinusförmigen mechanischen Beanspruchung. Dadurch verformt sich die Probe mit gleicher Periodizität. Aus den phasenverschobenen Kraft-Weg-Signalen wird der Speichermodul (in-Phase) und der um 90 ° phasenverschobene Verlustmodul jeweils in MPa errechnet. Der Quotient aus Verlust- und Speichermodul stellt die dimensionslose mechanische Dämpfung tan δ dar.

Die DMA erlaubt die Bestimmung der Glasübergangstemperatur Tg, die oftmals als das Maximum der tan δ-Kurve herangezogen wird und den intensivsten Strukturübergang (α-Übergang) in Polymeren Werkstoffen darstellt.

Die Glasübergangstemperatur Tg stellt die Temperatur oder den Temperaturbereich dar, in dem ein festes Glas oder Polymer in einen gummiartigen bis zähflüssigen Zustand übergeht.

Figur 1 zeigt die DMA des Beispiels 6 vorliegenden Erfindung. Die Ergebnisse der DMA sind Tg °C bei 200 °C; tan δ max bei 1,1088; E' [MPa] bei 20°C beträgt 3 019.

Figur 2 zeigt die DMA des Beispiels 10 vorliegenden Erfindung. Die Ergebnisse der DMA sind Tg °C bei 184 °C; tan δ max bei 0,09112; E' [MPa] bei 20°C beträgt 3 011.

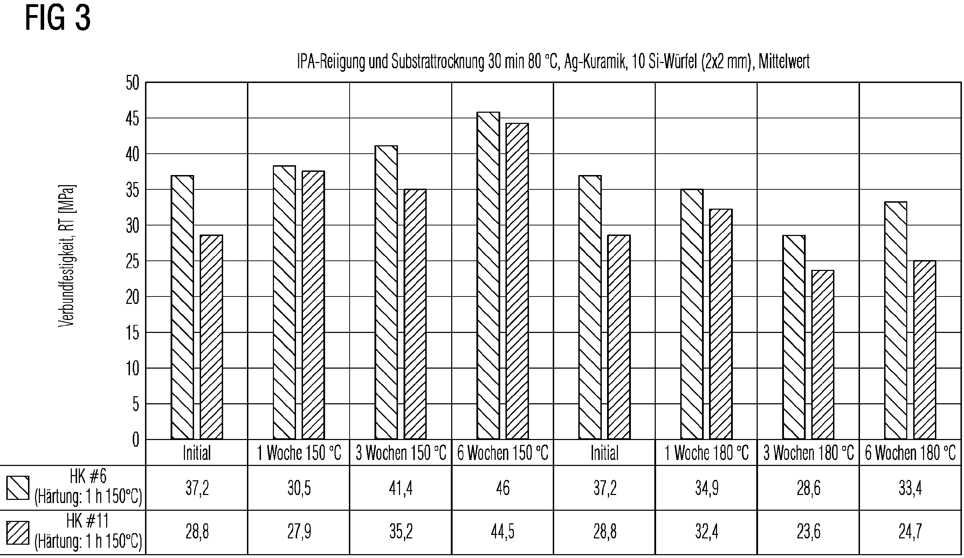

Figur 3 zeigt eine Messung zur Verbundfestigkeit und Alterungsstabilität bei Raumtemperatur, in [MPa]:
Es wurden vergleichend Proben der Beispiele 6 und 11 nach Härtung bei 150°C für eine Stunde gestestet. Es wurde jeweils ein Verbund aus einem Ag-Kuramik-Substrat mit einem Silizium-Wafer-Würfel 2x2 mm getestet und vermessen.

Die Abscherversuche "die shear strength" auf Ag-Keramiksubstrat mit Harzproben gemäß Beispiele 6 und 11, belegen, dass mit den Harzen hohe Verbundfestigkeiten > 20 [MPa] erzielt werden können. Wie dargestellt, ist die Haftung selbst nach 6 Wochen Temperaturauslagerung bei 150°C und 180°C immer noch sehr hoch, über 20[MPa]. Dabei ist fast immer das Material der Vergleichsprobe gemäß Beispiel 6 besser als das gemäß Beispiel 11, was aber nicht als absolute Wahrheit, sondern relativ, bezogen auf das Substrat und den Si-Wafer, zu verstehen ist.

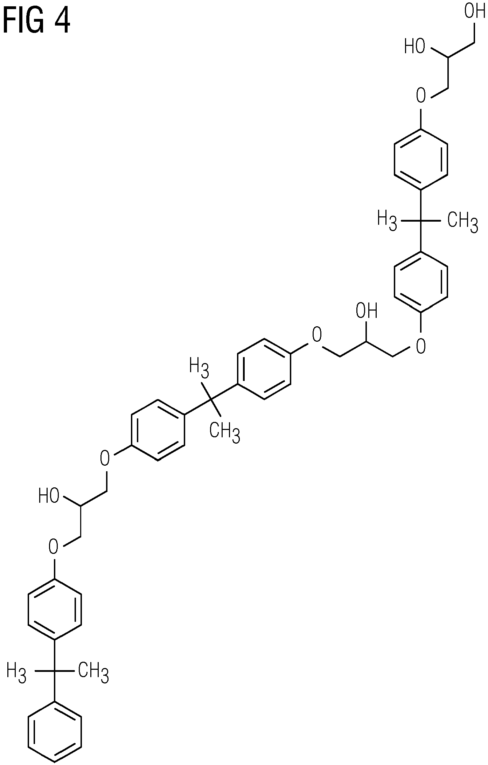

Figur 4 zeigt die Strukturformel **III** mit der CAS 25068-38-6 weil sie als Teil der Beschreibung nur in stark verkleinerter Form darstellbar ist.

Durch die Auswahl, Kombination und/oder Mengenanteile der Inhaltsstoffe können die Harzzusammensetzungen nach der vorliegenden Erfindung für eine breite Palette von Anwendungsformen und Prozesse wie Vergießen, Bonden, Abdecken, Verkapseln, Füllen, insbesondere "underfill" und/oder "sidefill" leistungselektronischer Bauelemente eingesetzt werden. Die Harzzusammensetzung stellt damit Produkt- und Systemlösungen, die hohe Einsatztemperaturen und eine ausreichend hohe elektrische Durchschlagfestigkeit für Anwendungen in der Leistungselektronik erfordern, bereit. Hinzu kommt die Konformität der Harzzusammensetzung mit den Anforderungen an so genannte "green products", die hier erfüllt werden. Insbesondere bei der Auswahl der Verbindungen der Komponente **B,** werden, sowohl hinsichtlich der Phthalsäuranhydrid-Verbindung als auch hinsichtlich der Imidazol-Verbindung eine enge Auswahl eingesetzt, die gemäß der REACH-Richtlinie empfohlen ist.

## Patentansprüche

1. Harzzusammensetzung, zumindest Komponente **A** und Komponente **B** im Verhältnis **A** zu **B** im Bereich von 100:90 bis 100:125 in der Harzzusammensetzung vorliegend, umfassend:
- **Komponente A** enthält zumindest zwei Epoxidharzverbindungen,
a) 75Gew% oder mehr an 3,4-Epoxycyclohexancarbonsäure-(3,4-epoxycyclohexalmethylester) mit der
Strukturformel **I** und der CAS Nummer: 2386-87-0 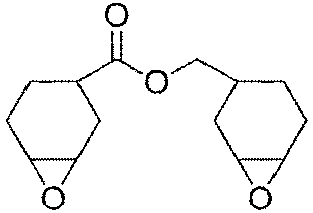 und
b) 25Gew% oder weniger einer zweiten Epoxidharzverbindung ausgewählt aus der Gruppe umfassend die folgenden Epoxidharzverbindungen:
b1) Poly-[(phenyl-glycidylether)-co-formaldehyd] der
Strukturformel **II** mit den CAS Nummern 28064-14-4 respektive CAS Nummer 25068-38-6 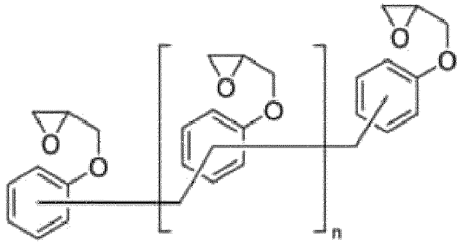 und b2) Bisphenol-A-Diglycidyletherharz der
Strukturformel **III** CAS 25068-38-6 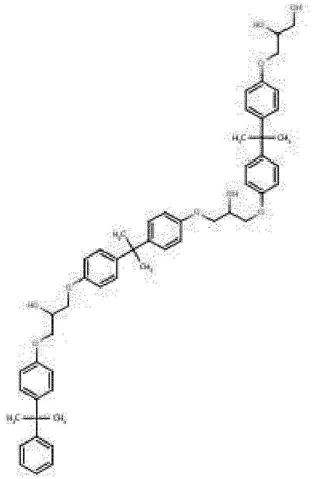
wobei die beiden Epoxidharzverbindungen **II** und **III** jeweils allein oder in beliebigen Mischungen, Blends, Copolymeren und/oder Kombinationen davon vorliegen,
- **Komponente B** umfasst zumindest 90 Gew% eines Methyl-tetra-hydrophthalsäureanhydrids MTHPA und
0,3 bis 5 Gew% eines 1,2-Dimethylimidazols.

2. Harzzusammensetzung nach Anspruch 1, wobei die Komponente **A** eine weitere Epoxidharz-Verbindung umfasst.

3. Harzzusammensetzung nach Anspruch 2, wobei die Komponente **A** eine weitere Epoxidharz-Verbindung in Form eines Monoglycidylethers.

4. Harzzusammensetzung nach einem der vorhergehenden Ansprüche, bei der in der Komponente **A** eine weitere Epoxidharz-Verbindung in einer Menge von bis zu 10 Gew% vorliegt.

5. Harzzusammensetzung nach einem der vorhergehenden Ansprüche, bei der in der Komponente **A** ein Reaktivverdünner vorgesehen ist.

6. Harzzusammensetzung nach einem der vorhergehenden Ansprüche, bei der als Reaktivverdünner zumindest ein ε-Caprolacton vorgesehen ist.

7. Harzzusammensetzung nach einem der vorhergehenden Ansprüche, bei der in der Komponente **A** ein Reaktivverdünner in einer Menge von bis zu 10 Gew% vorgesehen ist.

8. Harzzusammensetzung nach einem der vorhergehenden Ansprüche, bei der in der Komponente **A** ein mehrwertiger Alkohol vorgesehen ist.

9. Harzzusammensetzung nach Anspruch 8, bei der in der Komponente **A** ein mehrwertiger Alkohol in einer Menge von bis zu 10 Gew% vorgesehen ist.

10. Harzzusammensetzung nach einem der vorhergehenden Ansprüche, in der Füllstoffpartikel vorliegen.

11. Harzzusammensetzung nach einem der vorhergehenden Ansprüche, in der Füllstoffpartikel in einer Menge von 40 bis 85 Gew%, bezogen auf die Gesamtmasse der Harzzusammensetzung, vorliegen.

12. Formkörper, erhältlich durch Aushärten einer Harzzusammensetzung nach einem der Ansprüche 1 bis 11.

13. Verbund aus einem Formkörper nach Anspruch 12 und einem leistungselektronischen Bauelement.

14. Verbund nach Anspruch 13, wobei im Verbund eine Grenzfläche Metall-Formkörper vorliegt.

15. Verbund nach einem der Ansprüche 13 oder 14, wobei im Verbund zumindest eine Grenzfläche Keramik- und/oder Polyimid- einerseits und Formkörper nach Anspruch 12, andererseits, vorliegt.
